# EUROPEAN PATENT APPLICATION

(11) **EP 4 201 678 A1**
(43) Date of publication of application: **28.06.2023**
(21) Application number: 21217607.7
(22) Date of filing: 23.12.2021
(51) Int. Cl.: B41F 31/26, B41C 1/05, B41M 1/10, B23K 26/02, G02B 27/09

(54) **METHOD FOR OBTAINING ENGRAVING INSTRUCTIONS TO CONTROL A SYSTEM COMPRISING A SPATIAL LIGHT MODULATOR, TO REPRESENT A PIXELIZED IMAGE ON A SOLID PIECE BY MEANS OF AN ENGRAVING BEAM**

(71) Applicant: Boegli-Gravures SA, 2074 Marin-Epagnier (CH)
(72) Inventor: BOEGLI, Charles, 2074 Marin-Epagnier (CH); DUMITRU, Gabriel, 5415 Nussbaumen (CH); TONIN, Mario, 2067 Chaumont (CH)
(74) Representative: Weihs, Bruno Konrad

(57) **Abstract**

A method for obtaining engraving instructions to control a system comprising a Spatial Light Modulator (SLM), the engraving instructions being configured to control the system to represent a pixelized image on a solid piece by means of an engraving beam. The engraving beam is formed by an adjustable number of focal spots aligned on an orientation axis, thereby defining a brush, and is generated by means of a laser and the SLM. The pixelized image comprises at least a first delimited surface to which is attributed a first appearance, the first appearance corresponding to a set of a first angle of orientation of the brush and a first period corresponding to a distance separating one focal spot from a next focal spot in the brush, the first delimited surface to be filled with engraved structures arranged as first linear segments by means of the engraving beam, the first linear segments being perpendicular to the first orientation of the brush. The method comprises uploading of the pixelized image of the first delimited surface into a memory of the system; uploading a table of appearances comprising at least for the first appearance a set with the first angle of orientation and the first period; uploading parameters for available brush widths at least for the first appearance, the parameters comprising a list of at least one brush with a determined number of focal spots. The method further comprises rotating the first delimited surface as a function of an angle of rotation corresponding to the first angle of orientation; re-pixelization of the rotated first delimited surface; determining of a start position and an end position of each of the linear segments in order to sweep the rotated first delimited surface with the brush having the widest possible width in successive and adjacent stripes; determining of a first remaining surface not yet swept of the rotated first delimited surface and repeating the step of determining of a start position and an end position of the linear segments having a smaller width corresponding to an available brush that is smaller than the previously used brush; generating a computer-generated hologram for each available width of available brushes used with the first angle of orientation; and sending engraving instructions to a further memory of the system.

## Description

### Technical field

The invention relates to the field of system control for engraving a representation of a pixelized image on a solid piece by means of a beam, for example for a Spatial Light Modulator (SLM) system and a laser beam.

### Background

US publication US 7,495,745 B2 relates to a patterning method that forms a desired pattern on the surface of the object by exposing the surface of the object to light by using a plurality of spatial light modulation elements installed in a direction perpendicular to the relative moving direction of the object, so that a defective resolution does not occur on the surface of the object.

In US 7,495,745 B2 a desired pattern to form on an object needs to be smaller than an effective surface that can be exposed to one spatial light modulation element. Hence it is not possible to form a desired pattern that would cover a surface of the object larger than that which can be handled by a width of the one spatial light modulation element.

In contrast to US 7,495,745 B2 which describes to form a pattern in a single pass of the spatial light modulation above the surface of the object, the present invention seeks to form desired patterns with a spatial light modulation element, wherein the pattern's size may exceed that of the width that may be brushed by the spatial light modulation element in a single pass. In addition, the present invention addresses the problem of filing determined surfaces with engravings while optimizing the filing.

### Summary of the invention

In a first aspect the invention provides a method for obtaining engraving instructions to control a system comprising a Spatial Light Modulator (SLM), the engraving instructions being configured to control the system to represent a pixelized image on a solid piece by means of an engraving beam, the engraving beam being formed by an adjustable number of focal spots aligned on an orientation axis, thereby defining a brush, and being generated by means of a laser and the SLM; and the pixelized image comprising at least a first delimited surface to which is attributed a first appearance, the first appearance corresponding to a set of a first angle of orientation of the brush and a first period corresponding to a distance separating one focal spot from a next focal spot in the brush, the first delimited surface to be filled with engraved structures arranged as first linear segments by means of the engraving beam, the first linear segments being perpendicular to the first orientation of the brush. The method comprises: uploading of the pixelized image of the first delimited surface into a memory of the system; uploading a table of appearances comprising at least for the first appearance a set with the first angle of orientation and the first period; uploading parameters for widths of available brushes at least for the first appearance, the parameters comprising a list of at least one brush with a determined number of focal spots; rotating the first delimited surface as a function of an angle of rotation corresponding to the first angle of orientation; re-pixelization of the rotated first delimited surface to adjust a first height of pixel in the rotated first delimited surface to be equal to a size of the narrowest width of available brushes; determining of a start position and an end position of each of the linear segments in order to sweep the rotated first delimited surface with the brush having the widest possible width in successive and adjacent stripes, for each stripe from one border to an opposite border of the rotated first delimited surface while never trespassing a delimitation of the rotated first delimited surface and filling a maximum of the rotated first delimited surface; determining of a first remaining surface not yet swept of the rotated first delimited surface and repeating the step of determining of a start position and an end position of the linear segments having a smaller width corresponding to an available brush that is smaller than the previously used brush; generating a computer-generated hologram for each available width of available brushes used with the first angle of orientation; and sending engraving instructions to a further memory of the system, the engraving instructions comprising at least positioning commands for causing a relative movement between the solid piece and respective ones of each of the brushes for engraving the linear segments; computer-generated holograms and triggers for displaying of the computer-generated holograms on the screen of the SLM; and laser control commands for switching the laser on and off.

In a preferred embodiment, the pixelized image further comprises a second delimited surface to which is attributed a second appearance, the second appearance corresponding to a set of a second angle of orientation of the brush and a second period corresponding to a distance separating one focal spot from a next focal spot in the brush, the second delimited surface to be filled with engraved structures arranged as second linear segments by means of the engraving beam, the second linear segments being perpendicular to the second orientation of the brush. The method further comprises: uploading of the pixelized image of the second delimited surface in the memory of the system; uploading the table of appearances comprising in addition for the second appearance a set with the second angle of orientation and the second period; uploading parameters for widths of available brushes for the second appearance, the parameters comprising a list of at least one brush with a determined number of focal spots; rotating the second delimited surface as a function of an angle of rotation corresponding to the second angle of orientation; re-pixelization of the rotated second delimited surface to adjust a second height of pixel in the rotated second delimited surface to be equal to a size of the narrowest width of available brushes; determining of a start position and an end position of the second linear segments in order to sweep the rotated second delimited surface with the brush having the widest possible width in successive and adjacent stripes, for each strip from one border to an opposite border of the rotated second delimited surface while never trespassing a delimitation of the rotated second delimited surface and filling a maximum of the rotated second delimited surface; determining of a second remaining surface not yet swept of the rotated second delimited surface and repeating the step of determining of a start position and an end position of the linear segments having a smaller width corresponding to an available brush that is smaller than the previously used brush; generating a computer-generated hologram for each width of available brushes used with the second angle of orientation; and the step of sending the engraving instructions to the further memory.

In a further preferred embodiment, the pixelized image further comprises at least an additional delimited surface to which is attributed an additional appearance, the additional appearance corresponding to a set of an additional angle of orientation of the brush and an additional period corresponding to a distance separating one focal spot from a next focal spot in the brush, the additional delimited surface to be filled with engraved structures arranged as additional linear segments by means of the engraving beam, the additional linear segments being perpendicular to the additional orientation of the brush. At least the following steps are executed as appropriate: uploading of the pixelized image of the additional delimited surface in the memory of the system; uploading the table of appearances comprising in addition for the additional appearance a set with the additional angle of orientation and the additional period; uploading parameters for widths of available brushes for the additional appearance, the parameters comprising a list of at least one brush with a determined number of focal spots; rotating the additional delimited surface as a function of an angle of rotation corresponding to the additional angle of orientation; re-pixelization of the rotated additional delimited surface to adjust a second height of pixel in the rotated additional delimited surface to be equal to a size of the narrowest width of available brushes; determining of a start position and an end position of the additional linear segments in order to sweep the rotated additional delimited surface with the brush having the widest possible width in successive and adjacent stripes, for each strip from one border to an opposite border of the rotated additional delimited surface while never trespassing a delimitation of the rotated additional delimited surface and filling a maximum of the rotated additional delimited surface; determining of an additional remaining surface not yet swept of the rotated additional delimited surface and repeating the step of determining of a start position and an end position of the linear segments having a smaller width corresponding to an available brush that is smaller than the previously used brush; generating a computer-generated hologram for each width of available brushes used with the additional angle of orientation; and the step of sending the engraving instructions to the further memory of the system.

In a further preferred embodiment, the step of uploading the parameters for widths of available brushes further comprises sorting the at least one brush(es) as a function of their respective width expressed in a number of the focal spots, from the widest brush to the narrowest brush.

In a further preferred embodiment, the step of generating computer generated holograms is configured to use an iterative Fourier-transform algorithm.

In a second aspect, the invention provides a data carrier comprising a software that enables a computer to execute the method as described herein above. The method is configured for obtaining engraving instructions to control a system comprising a Spatial Light Modulator (SLM), the engraving instructions being configured to control the system to represent a pixelized image on a solid piece by means of an engraving beam, the engraving beam being formed by an adjustable number of focal spots aligned on an orientation axis, thereby defining a brush, and being generated by means of a laser and the SLM; and the pixelized image comprising at least a first delimited surface to which is attributed a first appearance, the first appearance corresponding to a set of a first angle of orientation of the brush and a first period corresponding to a distance separating one focal spot from a next focal spot in the brush, the first delimited surface to be filled with engraved structures arranged as first linear segments by means of the engraving beam, the first linear segments being perpendicular to the first orientation of the brush. The method comprises: uploading of the pixelized image of the first delimited surface into a memory of the system; uploading a table of appearances comprising at least for the first appearance a set with the first angle of orientation and the first period; uploading parameters for available brush widths at least for the first appearance, the parameters comprising a list of at least one brush with a determined number of focal spots; rotating the first delimited surface as a function of an angle of rotation corresponding to the first angle of orientation; re-pixelization of the rotated first delimited surface to adjust a first height of pixel in the rotated first delimited surface to be equal to a size of the narrowest width of available brushes; determining of a start position and an end position of each of the linear segments in order to sweep the rotated first delimited surface with the brush having the widest possible width in successive and adjacent stripes, for each stripe from one border to an opposite border of the rotated first delimited surface while never trespassing a delimitation of the rotated first delimited surface and filling a maximum of the rotated first delimited surface; determining of a first remaining surface not yet swept of the rotated first delimited surface and repeating the step of determining of a start position and an end position of the linear segments having a smaller width corresponding to an available brush that is smaller than the previously used brush; generating a computer-generated hologram for each available brush width used with the first angle of orientation; and sending engraving instructions to a further memory of the system, the engraving instructions comprising at least positioning commands for causing a relative movement between the solid piece and respective ones of each of the brushes to engrave the linear segments for engraving; computer-generated holograms and triggers for displaying of the computer-generated holograms on the screen of the SLM; and laser control commands for switching the laser on and off.

### Brief description of the drawings

The invention will be better understood in the light of the detailed description of preferred embodiments and in reference to the drawings wherein
figure **1** schematically illustrates an example of a set-up for engraving gratings according to the invention;
figure **2** schematically illustrates a brush as defined according to an example embodiment of the invention;
figure **3** schematically illustrates a process of image rotation according to a given brush orientation in the context of planning the engraving of an image according to an example embodiment of the invention;
figure 4 contains a flowchart explaining the process of obtention of the engraving instructions according to an example embodiment of the invention;
figure 5 schematically illustrates a further process for rotating and re-pixelating of a pixelated image according to an example embodiment of the invention;
figure 6 schematically illustrates the process for choosing brushes for optimal filling of a surface for engraving according to an example embodiment of the invention;
figure **7** schematically illustrates an example of a plurality of delimited surfaces of an image, with various gratings characteristic of the appearance of each delimited surface, according to an example engraving obtained with the invention;
figures **8** to **11** show examples of set-ups for engraving solid pieces;
figure **12** illustrates an example for an embossing set-up that uses an embossing roller structured according to the invention; and
figure **13** illustrates an example for an injection moulding set-up that uses an injection moulding insert structured according to the invention.

Same references will be used throughout the figures to designate features that are the same or similar.

### Detailed description of preferred embodiments of the invention Introduction to the invention

The invention enables to represent an image and/or another decorative design, comprising one or more surfaces having each an appearance, the appearance comprising for example a colour, on the surface of a solid piece, by means of engraved structures.

The structures to engrave are gratings, with a given period and orientation angle on the surface of the solid piece.

In the image or in the decorative design, several types of gratings can be used, with various periods and various orientations. The choice of the period and the orientation angle determines a specific appearance, including for example a colour and an intensity, that can be viewed by a user that would observe, for example, a beam of white light projected on and then reflected from the solid piece by the engraved representation of the image and/or decorative design after the engraving. Of course, the reflection could also be from a product embossed with a solid piece engraved with the image or decorative design according to the present invention. Hence the specific appearance may be given by a look-up table that makes a link between the appearance on one hand, and the corresponding set of the period and orientation angle of the grating to engrave on the other hand.

The following table 1 illustrates an example of an appearance look-up table indicating period of grating and orientation angle for determined appearances:

**Table 1**

| Appearance | Orientation angle | Period of grating |
|---|---|---|
| Appearance_0 | *ω*₀ | D_0 |
| Appearance_1 | *ω*₁ | D_1 |
| Appearance_2 | *ω*₂ | D_2 |
| etc. | | |

The concept of the orientation angle will be explained in more detail below.

### Set-up for engraving the gratings

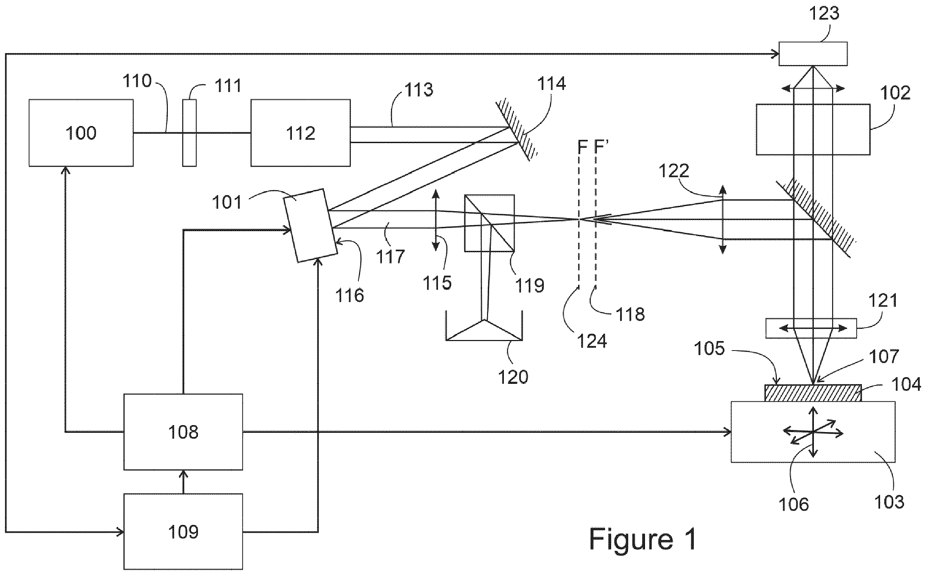

An example of a set-up for engraving the gratings in a solid piece is schematically illustrated in figure 1.

The set-up, which is configured to engrave a solid piece 104, comprises
- a laser 100;
- a spatial light modulator **101;**
- an auto-focus focusing device **102;**
- a sample holder **103** configured to hold the solid piece **104,** the solid piece **104** having a surface **105** to be engraved;
- positioning means **106** configured to move the sample holder **103** and thereby displace the solid piece **104** in a focus plane **107** of the objective lens **121;**
- a controller **108;** and
- a computer **109.**

The set-up may further comprise features well known to a person skilled in the art, to condition a laser beam **110** emitted by the laser **100,** such as a Half-Wave Plate (HWP) **111,** and a beam expander **112.** The expanded laser beam **113** may be reflected towards the SLM **101** by means of a mirror **114.**

Once reflected from an SLM screen **116** of the SLM **101,** a phase modulated beam **117** passes through a reconstruction lens **115,** which is configured to focus individual phase shifted laser beams from the phase modulated beam 117 into a reconstruction plane F' 118 where the split beams first appear.

In the reconstruction plane **118,** the zeroth order of the reconstructed phase (not referenced in figure **1****)** may be an issue for the homogeneity of the plurality of split beams. Hence, in a preferred embodiment, a polarizing beam splitter **119** and a beam dump **120** are placed in the phase modulated beam **117** to filter a part of a laser beam that would have otherwise contributed to the zeroth order.

To further reduce the effect of the zeroth order, a spherical phase is added to the SLM screen **116** to shift the reconstruction plane along the optical axis and separate the reconstruction plane **118** where the split beam appears from a plane F **124** where the zeroth order appears.

The focusing head in the set-up of figure **1** comprises the auto-focus focusing device **102,** and a tube lens **122,** e.g., a tube lens having for example a focal length of 200 mm. The tube lens **122** is configured to send an image from the reconstruction plane **118** to infinity, toward an objective lens **121,** which may be realized as an infinity corrected microscope objective.

In a preferred embodiment, the objective lens **121** may have a magnification greater than 20x, a numeral aperture greater than 0.35, a focal length smaller than 10 mm and a depth of field of smaller than 10 µm.

The objective lens **121** creates the image of the reconstruction plane **118** with a reduction factor that is in direct relation to the magnification of the objective lens **121** and the tube lens **122.**

Because of the shallow depth of field of the objective lens **121,** it is necessary to carefully adjust the focus so that the image of the reconstruction plane **118** where the split beams are located is coincident with the surface **105 of** the solid piece **104.**

The controller **108** is sending inputs to the positioning means **106** according to engraving instructions, to move the solid piece **104** laterally in front of the objective lens **121** in order to engrave the grating(s).

The controller **108** is further configured to switch the laser **100** on and off and control the computer generated hologram to be displayed by the SLM **101,** and triggering for displaying of the computer-generated holograms on the screen of the SLM, depending on the needs for engraving expressed in the engraving instructions (not illustrated).

An optional CCD camera **123** is configured to receive light reflected from the surface 105 for live observation of the surface **105.**

The auto-focus focusing device **102** preferably works at a comparatively high speed to follow the motion of the solid piece **104.** The auto-focus focusing device **102** may for example work at sampling rates above 10 Hz, so that the position follows closely the surface 105 at all times, i.e., in a closedloop. The axes of the positioning means 106 may for example move the sample holder 103 at a speed of 1 mm/s, which means that the auto-focus focusing device 102 checks and adjusts the position of the focus at the most every 100 µm of displacement of the axes.

### Engraving of gratings

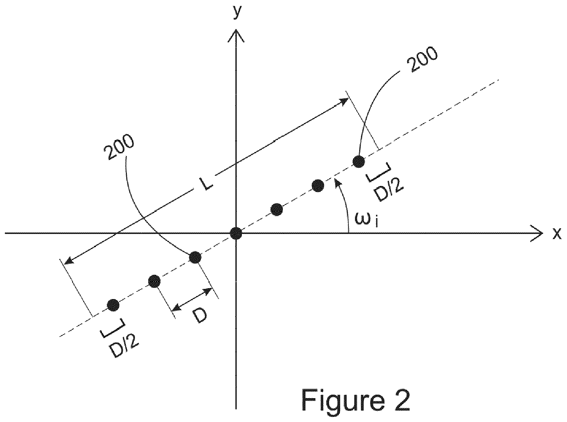

The gratings may be engraved using for example the set-up illustrated in figure 1 in order to produce a linear distribution of focal spots (not shown in figure 1) to be projected in the focal plane 107 - such linear distribution of focal spots will be designated using the term « brush » herein after - at the output of the focusing device. An example of the brush is illustrated in figure **2****,** where it is represented in a coordinate system of the SLM screen (x,y).

In figure **2** the brush comprises 7 focal spots **200.** According to parameters controlling the SLM (both not illustrated in figure **2****)** the focal spots **200** are separated from each other by a distance **D** that is equal to the period of the grating to be engraved (not illustrated in figure **2****).** Hence a width **L** of the brush amounts to 7 focal spots **200** or expressed differently a length expressed as *L* = 7 × *D.*

The brush is produced by the SLM **101** and its SLM screen **116** at a specific orientation angle. This is the orientation angle at which it will be projected on the surface **105** of the solid piece **104** for engraving. This orientation angle is important because it is directly related to the final appearance of the engraved image and it will be used to set a trajectory of the solid piece **104** exposed to the brush at the time of engraving, the trajectory having to be perpendicular to the brush (solid piece **104** and surface **105** not illustrated in figure **2****).**

The trajectory of the solid piece **104,** also called the direction of engraving will be a displacement direction of the solid piece **104** operated with the positioning means **106.** An orientation of the brush at an angle *ωᵢ* is defined relative to the x-axis in figure **2****.**

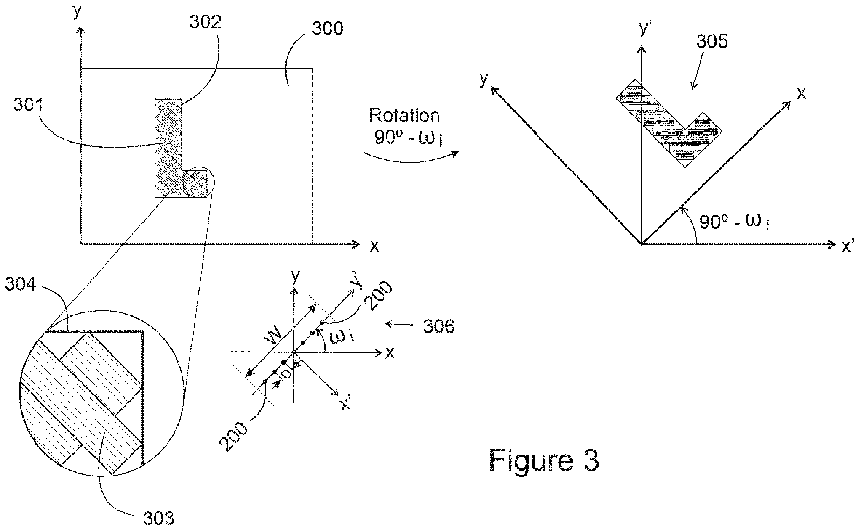

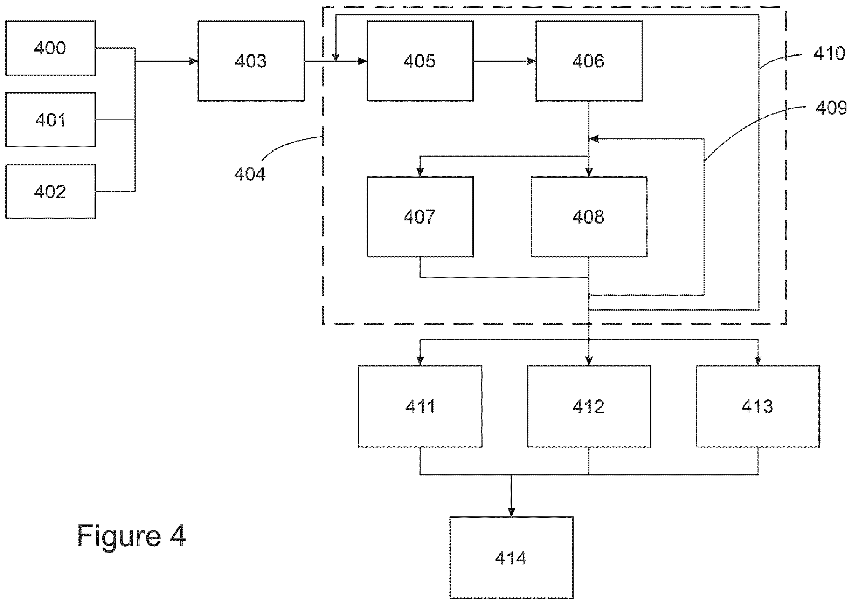

Figure **3** schematically illustrates a process of image rotation according to a given brush orientation in the context of planning the engraving of an image according to an example embodiment of the invention. The example image to engrave represents the capital letter "L" on a sheet **300.** The image has a surface **301** delimited by an outline **302.** In a strategy to engrave the surface 301, a set of control instructions for a system like the set-up of figure **1****,** needs to be obtained. This obtention involves analysing the image, rotating and re-pixelating various surfaces making up the image (only one surface 301 in the example of figure 3) according to their respective required appearance, for each surface determining at least a brush to engrave it, and segments (like segments 303 making a diffraction grating on the surface **301** as shown in the enlarged view **304),** to be engraved inside the surface with the respective brush or brushes. The resulting set of control instructions is then fed into the controller **108** of the system, which uses it to control the system in performing the engraving of the image on the solid piece **104** by means of the engraving beam. Figure **4** contains a flowchart explaining the process of obtention and engraving according to an example embodiment of the invention.

Figure **3** further illustrates an example of a brush **306,** which is not represented in the right scale as compared to the example image, but contains various indications, comprising an orientation *wᵢ* of the brush in the (x,y)-coordinate system, the period D separating focal points 200 of the brush 306, the width W of the brush 306 and a (x',y')-coordinate system in which the brush 306 is represented parallel to the y'-axis, the intended engraving direction being oriented in direction of the x'-axis.

According to the flowchart of figure 4, an image to engrave in its pixelated version 400, an appearance look-up table 401, and a brush data table 402 are made available for an analysis 403 of the image 400. The image 400 may comprise one or more surfaces with respective required appearances. Due to constraints of the SLM (not shown in figure **4****),** a determined period of the grating to engrave, implies a corresponding choice of type of brush with an adapted distance **D** between its focal spots, and a corresponding orientation of the type of brush. The choice of the determined period is made according to a determined appearance that a surface of the image must have. This information is comprised in the appearance look-up table **401.** For example, using table **1** herein above, when a surface of the image needs to have an Appearance_0, the period of gratings to use is D_0, which implies an orientation angle of the brush having the value *ω*₀. A further look-up table, such as for example table **2** hereunder, provides the brush data **402,** which indicates which widths of brushes are available for any type of available appearance, i.e., for any type of available combination of an orientation angle and a period of grating. It could for example be possible that for a specific appearance such as Appearance_0 a set of 3 brushes is available having respective widths of 2 × D, 4 × D and 8 × D. This is also a limitation burdened by the SLM, which has implications on the strategy to adopt to engrave the surface. The Appearance could for example be the same as that known from table 1.

Example of look-up table for brush data:

**Table 2**

| **Appearance** | **Available brush widths** |
|---|---|
| Appearance_0 | 2 × D, 4 × D and 8 × D |
| Appearance_1 | 4 × D and 8 × D |
| Appearance_2 | 2 × D and 4 × D |
| etc. | |

The width of available brushes may depend on the size of the SLM screen and other factors, and impact on the processing time and the final aspect of the engraved image.

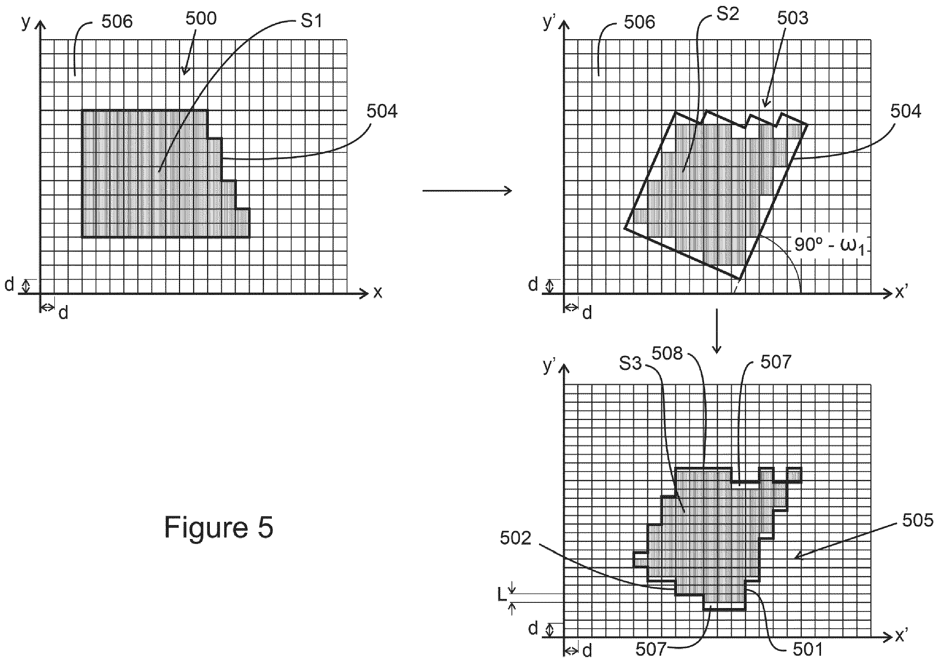

The analysis **403** results in a series of orientations that corresponds to a series of required appearances for each surface making up the image **400**, and initiates for each appearance Appearance_i a corresponding planning of engraving **404.** The planning starts with a computing of a rotation **405** of the image **400** by an angle of 90° - *ωᵢ* whereby *ωᵢ* is the orientation angle for Appearance_i as obtained from the look-up table **401**. This is also illustrated in figure **3** where the image of the capital letter "L" is rotated in position **305.** Then in a step of re-pixelating **406,** the smallest width Wmin_i of brush from brush data table **402** corresponding to Appearance_i is determined, and the image re-pixelated to keep the same physical image size but with a pixel height set at the smallest width Wmin_i. This will be further detailed below with the description of figure **5****.**

Referring now to figure **5****,** an image or decorative design **500** to engrave may be represented as a pixelized image in a (x,y)-coordinate system, as shown in the upper left quadrant of figure **5****,** wherein the textured squares represents the image **500** and the grid 506 represents the pixels of the image. The represented hatching and in particular the direction of the lines in the hatching of the textured squares is not a representation of any engraving or engraved structures. The image **500** comprises at least a first delimited surface **S1.** In figure **5** the image **500** comprises only one delimited surface **S1,** which is the first delimited surface **S1** delimited by a contour **504** and corresponds exactly to the outline of the image **500.** To the first delimited surface **S1,** a first appearance Appearance_1 is attributed (appearance not represented in the figure), i.e., a first angle of rotation *ω*₁ and a first period D_1. The first angle of rotation *ω*₁ is indicative of the orientation of the available brushes (brushes not illustrated) for the Appearance_1. The first delimited surface **S1** is thus to be filled with engraved structures arranged as linear segments by means of the engraving beam (not shown in figure 5), the linear segments being perpendicular to the available brushes. The linear segments comprise gratings.

The image **500,** i.e., the pixelized image to engrave is loaded in a memory of the computer **109** (not shown in figure **5****)** and analyzed to be separated in one or more delimited surfaces according to the appearances present in the pixelized image. For the present example explanation of figure **5****,** only one such appearance is present, i.e., Appearance_1. We assume further that the linear distribution of focal spots of the available brushes is vertical in the (x',y')-coordinate system after a rotation of the image as shown in the upper right quadrant in figure **5****,** i.e., oriented like the y'-axis, and that the engraving is performed horizontally in the image plane, i.e., in direction of the x'-axis. To represent the various orientations of the gratings in the final engraving, i.e., the only orientation here is for Appearance_1, we simulate the rotation *ω*₁ of the grating by the rotation of the image by an angle 90° - *ω*₁ in the image plane, as shown at reference **503** in the upper right quadrant of figure **5****.** During this step, only the pixels that are entirely inside the rotated contour **504** are considered, creating a new interpolated first delimited surface **S2** that is an interpolation of the first delimited surface **S1.**

In a further step, the contour **508** of the interpolated first surface **S2** is re-pixelized to adjust the height of the pixel to match the width of the smallest brush being used. During this re-pixelization, only the pixels that are entirely inside the interpolated first surface **S2** are considered, creating a new re-pixelized interpolated first surface **S3,** corresponding to the delimited surface **S1.**

Because the focal spots distribution is linear and keeps the same shape during the engraving, and as shown in the third quadrant in the lower right of figure **5****,** we intend to engrave rectangles inside the re-pixelized interpolated first delimited surface **S3,** that have a width **L** in y'-direction corresponding to the width of the brush being used (brush not illustrated in figure **5****),** from one border, e.g., border **501,** to an opposite border, e.g., opposite border **502** of the re-pixelized interpolated first delimited surface **S3** while never trespassing a contour **508** of the re-pixelized interpolated first delimited surface **S3** and the total of the rectangles filling a maximum of the re-pixelized interpolated first delimited surface **S3.**

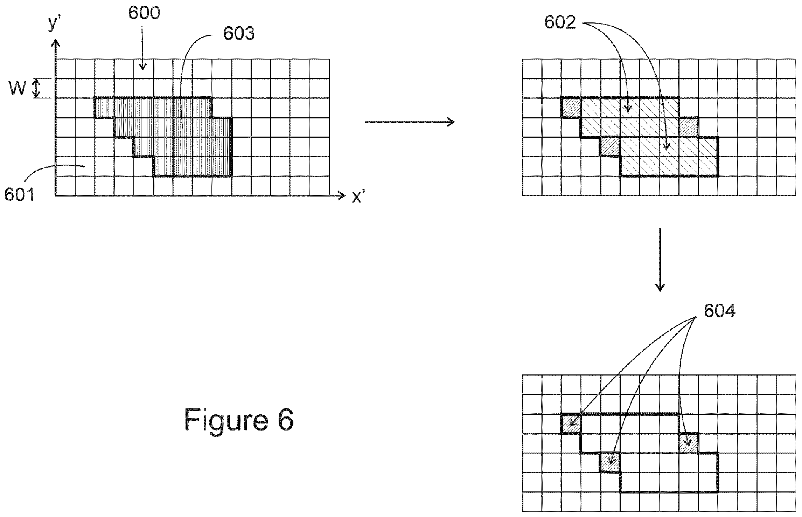

In a preferred embodiment not illustrated in figure **5****,** rather than using only the brush with the smallest width **L,** we may at first use at least a further brush having a multiple of this smallest focal spot distribution width to perform the engraving process of the delimited surface. Subsequently, if any empty non-engraved areas subsist, we may possibly then engrave these empty non-engraved areas with a brush with a smaller width. This may speed up the engraving process. This will become more apparent herein below in the description of an example in figure **6****.**

Figure **6** schematically illustrates a process for choosing brushes for an optimal filling of a delimited surface **603** for engraving according to an example embodiment of the invention. An image or decorative design **600** to engrave may be represented as a pixelized image in a (x',y')-coordinate system, as shown in the upper left quadrant of figure **6****,** wherein the textured squares represents the image **600** and the grid **601** represents the size of the pixels, which are squares with a side length **W.** The represented hatching and in particular the direction of the lines in the hatching of the textured squares is not a representation of any engraving or engraved structures. In a first step of engraving, a brush having a width of 2 x ***W*** may be used to engrave rectangles **602** (2 rectangles in figure **6****),** as shown in the upper right quadrant of figure **6****).** In a second step of engraving, a brush having a width of W may be used to engrave remaining non-engraved parts **604** of the delimited surface of image **600,** as illustrated in the lower right quadrant of figure **6****.**

Returning now to figure **4****,** in box **407** a computer-generated hologram to produce a selected brush with the smallest width Wmin_i of brush from the available brushes is computed intended to produce a corresponding distribution of focal points for the engraving when displayed on the screen of the SLM **116.** In the example previously discussed in relation for figure 5, Wmin_i = L. This computer-generated hologram is obtained from the desired distribution of focal points by applying an iterative Fourier-Transform algorithm, following a method that is well known for a person skilled in the art of digital holography. In box **408** a start and a finish for each rectangle, i.e., the size of the rectangles to engrave is computed. In the example previously discussed in figure 5, one such rectangle **504** is highlighted with a start at the border **501** and a finish at the opposite border **502.** The starting and ending points of the rectangles that are computed in the step 408 are expressed in coordinates inside the (x',y') coordinate system. To be used by the axes of the machine, they must be rotated to be expressed in coordinates in the (x,y) coordinate system. This is done by applying a rotation transform with a rotation angle equal to *ωᵢ*- 90°.

As various brush sizes may be used to engrave the rectangles to accelerate the engraving of the image, we may define such rectangles having widths corresponding to various available brushes, typically in multiples of width of the smallest brush, as explained herein above. This cycle of process steps **407** and **408** is repeated for each selected one of the various brush sizes, as represented by the loop arrow **409.**

In case that the image contains a plurality of delimited surfaces with respective corresponding appearances, the process steps **405** to **409** are repeated for each delimited surface, as represented by loop arrow **410.**

The result of process steps **405** to **410** is a set of commands which by means of the computer **109** control the SLM **101** to produce the appropriate brush, the positioning means **106** to move the solid piece **104** in order to successively engrave all rectangles making up the delimited surfaces in their respective orientation and size, i.e., appearance, and obtain an engraved representation of the image on the surface **105** of the solid piece **104.** Hence in a step **411** Computer Generated Holograms (CGH) are sent to the SLM **101** to program the SLM screen **116** to generate the desired brush, in a step **412** positioning commands are sent to the positioning means **106** to move the solid piece **104** for engraving, and in step **413** laser control commands are sent to the laser **100** to switch the laser on and off as appropriate, the whole resulting in the engraving of the image **414** on the solid piece **104.**

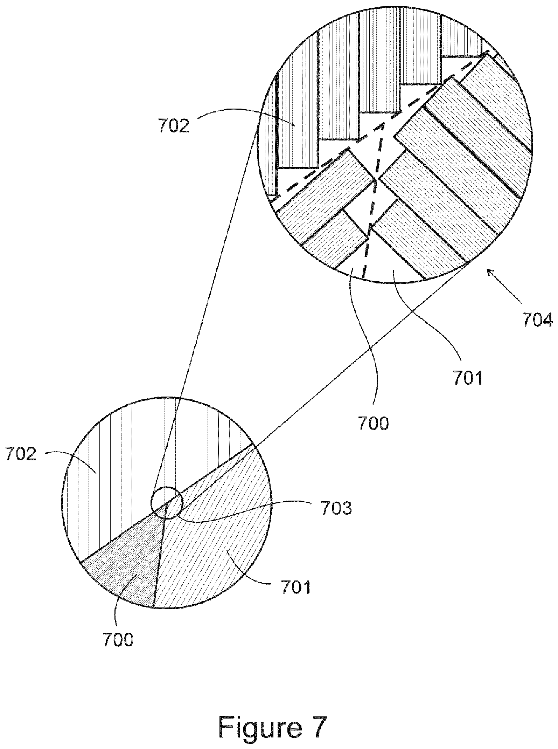

Figure **7** schematically illustrates an example of a plurality of delimited surfaces of an image, with various rectangles characteristic of the appearance of each delimited surface, according to an example engraving obtained with the invention. In the lower non-magnified part of figure 7, the represented hatching and in particular the direction of the lines in the hatching of the textured squares is not a representation of any engraving or engraved structures.

More specifically, figure **7** shows parts **700, 701** and **702** of three different delimited surfaces of the image (image not represented as a whole in figure **7****)** which are adjacent to each other and come together in a centre-part **703** which is illustrated in a magnified view **704.** The different textures contained in the rectangles from one delimited surface to another are representative of different appearance parameters for each delimited surface, that is to say the different diffraction gratings for each delimited surfaces. In order to engrave these delimited surfaces, we determined for each delimited surface a corresponding rotated version of the image, whereby the rotation corresponds to the appearance and thus to the brush to be used for the concerned delimited surface, and repixelate the corresponding rotated image as explained herein above so that the height of a pixel in the new pixelized rotated image has the size of the smallest focal spot distribution length, i.e., the smallest possible width of the brush. We then take the largest focal spot distribution possible, i.e., the widest possible brush, being a multiple of the smallest width of brush, and find a line that can be engraved in the concerned delimited surface in the rotated, re-pixelized image, using the smallest width of brush. We compute the starting position and the stopping position for all the lines in the rotated and re-pixelized image for this distribution size, in a similar manner as in the treatment of the first delimited surface.

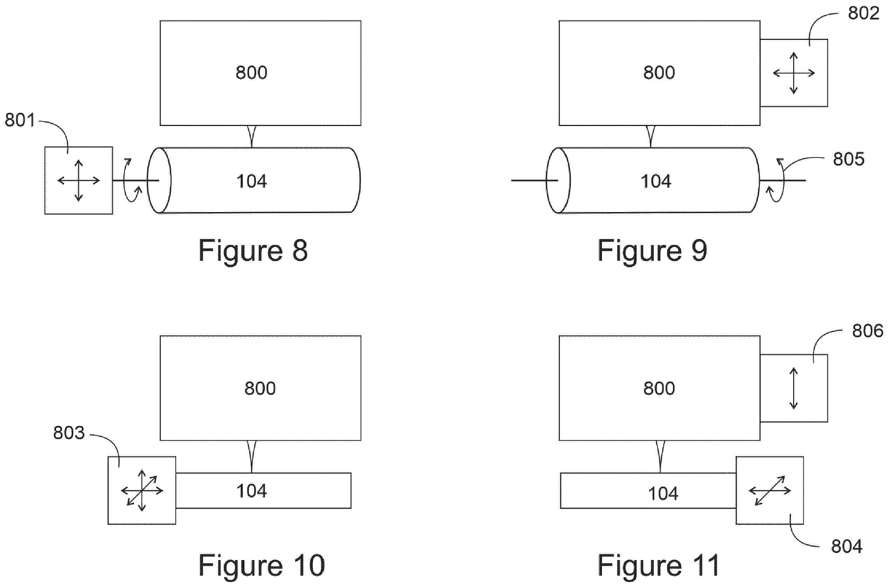

Referring to figures **8** to **11****,** these show examples of set-ups for engraving solid pieces. Each contains at the set **800** of laser, SLM and focusing head equipment configured to focus an engraving beam on the solid piece **104** as known from figure **1****.** In figure **8** the solid piece **104** is a roller which may be axially and laterally moved, as well as rotated by a first positioning means **801.** In the alternative embodiment of figure **9** the whole set **800** may be moved in two dimensions by second positioning means **802** while the solid piece **104** which is a roller may be rotated by rotating means not illustrated in the figure, but according to arrow **805.** In figure **10** the solid piece **104** is planar and may be moved in three linear directions in three dimensions by third positioning means **803.** Finally, in figure **11** the solid piece **104** is also planar and may the moved in a plane, i.e., in two dimensions, by means of fourth positioning means **804,** while the set **800** comprises fifth positioning means **806** configured to maintain in effect the focus of the focusing head in a constant distance from the solid piece **104.**

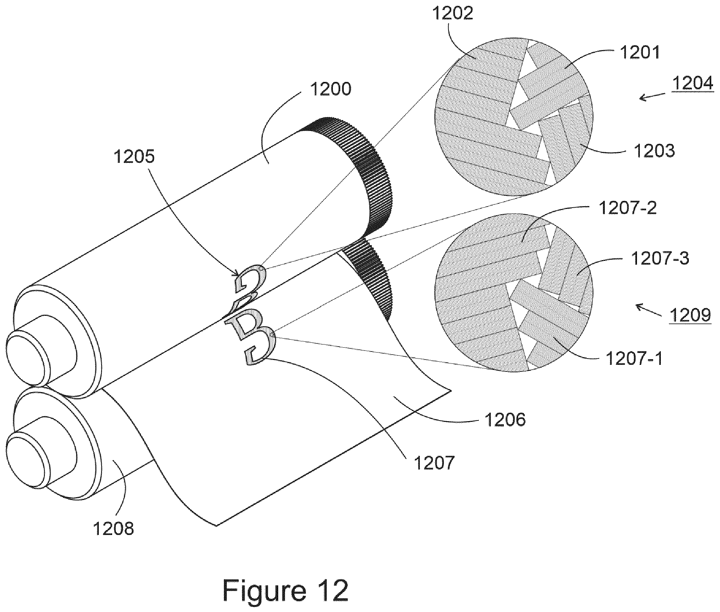

As illustrated for a first example of preferred use case in figure **12** a solid piece may be an embossing roller **1200** having an axial cylindrical symmetry, e.g., a steel roller having a diameter between 10 mm and 250 mm and a length between 50 mm and 1500 mm. The embossing roller **1200** may be structured with an engraved pattern **1205** on its lateral surface according to the invention, so that diffraction gratings **1201, 1202, 1203** are engraved on its lateral surface as illustrated in a magnified view **1204** of the engraving **1205.** The embossing roller **1200** may be used as an embossing tool in order to emboss products such as a foil **1206** and obtain an embossed pattern **1207,** with embossed gratings **1207-1, 1207-2, 1207-3** as represented in a magnified view **1209** of the embossing, corresponding to diffraction gratings **1201, 1202, 1203.** The embossed diffraction gratings may be used to fulfil purposes of for example aesthetics, design, authentication, brand communication, etc. The so engraved embossing roller **1200** may be mounted in an embossing set-up (not illustrated in figure 12), for instance a set-up with two rollers, the engraved embossing roller **1200** and a counterroller **1208,** whereas the latter is slick in the here depicted example.

This preferred use case of the invention is appropriate for the fine embossing of thin films or thin packaging foils having a thickness in an approximate range from 5 µm to 500 µm using the rotational process as illustrated in figure **12****.** It is well known in the food industries, pharmaceuticals, commodity goods, tobacco industry, luxury, and so on, to emboss thin packaging films and foils using rotational embossing rollers. Such thin packaging foils may be intended to be wrapped around a bunch of cigarettes or reduced risk tobacco products, or to be used as packaging material for coffee or tea tabs, for chocolate, butter, or similar food products, as well as in pharmaceuticals, fragrances, electronics, jewellery or watches. The embossed thin film or foil may for example be any one of the list comprising a metal foil, a metal foil laminated with organic substrates, a plastic film laminated with organic substrates such as paper, a polymer film laminated with organic substrates such as paper, a metallized polymer film, a polymer film, a hybrid polymer film, or hybrids in general.

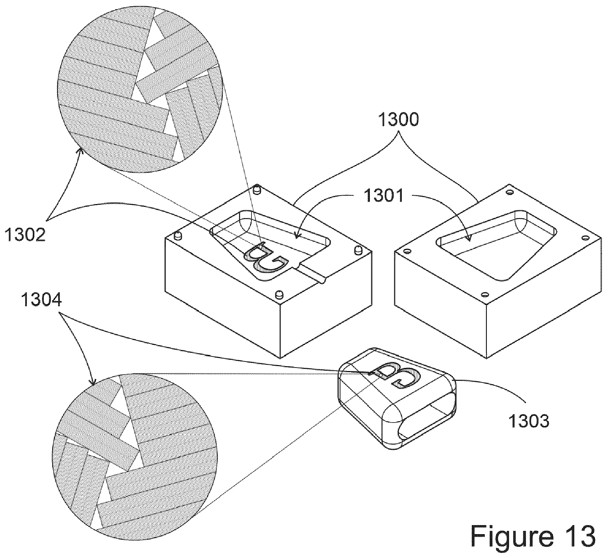

Figure **13** depicts a second preferred use case example of the invention, in which a solid piece **1300** whose lateral dimensions, i.e., length, width, height, may be smaller than 200 mm, which presents at least a cavity 1301, and which may be used as injection moulding die, is structured according to the invention, in order to fulfil aesthetics, design, authentication, brand communication, etc. purposes for objects that will be made using the moulding die.

This preferred second use case example of the invention is appropriate for the transfer of the engraved diffraction gratings **1302** into a molten polymer **1303** by injection moulding, whereas the molten polymer completely fills the at least one cavity **1301** of the solid piece **1300** and upon cooling solidifies and builds accordingly a plastic part having the shape of the at least one cavity and the transferred diffraction gratings **1304** on its outer surface. The polymer may for example be any one of the lists comprising polycarbonate, polypropylene, polystyrene, PMMA, a hybrid polymer grade or hybrids in general.

In a further aspect provides data carrier comprising a software that enables a computer to execute the method as discussed hereinabove. The data carrier is for use for example with the set-up illustrated in figure 1, and more particularly with the computer 109.

## Claims

1. A method for obtaining engraving instructions to control a system comprising a Spatial Light Modulator (SLM), the engraving instructions being configured to control the system to represent a pixelized image on a solid piece by means of an engraving beam,
the engraving beam being formed by an adjustable number of focal spots aligned on an orientation axis, thereby defining a brush, and being generated by means of a laser and the SLM; and
the pixelized image comprising at least a first delimited surface to which is attributed a first appearance, the first appearance corresponding to a set of a first angle of orientation of the brush and a first period corresponding to a distance separating one focal spot from a next focal spot in the brush, the first delimited surface to be filled with engraved structures arranged as first linear segments by means of the engraving beam, the first linear segments being perpendicular to the first orientation of the brush;
the method comprising:
uploading of the pixelized image of the first delimited surface into a memory of the system;
uploading a table of appearances comprising at least for the first appearance a set with the first angle of orientation and the first period;
uploading parameters for widths of available brushes at least for the first appearance, the parameters comprising a list of at least one brush with a determined number of focal spots;
rotating the first delimited surface as a function of an angle of rotation corresponding to the first angle of orientation;
re-pixelization of the rotated first delimited surface to adjust a first height of pixel in the rotated first delimited surface to be equal to a size of the narrowest width of available brushes;
determining of a start position and an end position of each of the linear segments in order to sweep the rotated first delimited surface with the brush having the widest possible width in successive and adjacent stripes, for each stripe from one border to an opposite border of the rotated first delimited surface while never trespassing a delimitation of the rotated first delimited surface and filling a maximum of the rotated first delimited surface;
determining of a first remaining surface not yet swept of the rotated first delimited surface and repeating the step of determining of a start position and an end position of the linear segments having a smaller width corresponding to an available brush that is smaller than the previously used brush;
generating a computer-generated hologram for each available width of available brushes used with the first angle of orientation; and
sending engraving instructions to a further memory of the system, the engraving instructions comprising at least
positioning commands for causing a relative movement between the solid piece and respective ones of each of the brushes for engraving the linear segments;
computer-generated holograms and triggers for displaying of the computer-generated holograms on the screen of the SLM; and
laser control commands for switching the laser on and off.

2. The method of claim 1, wherein the pixelized image further comprises a second delimited surface to which is attributed a second appearance, the second appearance corresponding to a set of a second angle of orientation of the brush and a second period corresponding to a distance separating one focal spot from a next focal spot in the brush, the second delimited surface to be filled with engraved structures arranged as second linear segments by means of the engraving beam, the second linear segments being perpendicular to the second orientation of the brush,
the method further comprising:
uploading of the pixelized image of the second delimited surface in the memory of the system;
uploading the table of appearances comprising in addition for the second appearance a set with the second angle of orientation and the second period;
uploading parameters for widths of available brushes for the second appearance, the parameters comprising a list of at least one brush with a determined number of focal spots;
rotating the second delimited surface as a function of an angle of rotation corresponding to the second angle of orientation;
re-pixelization of the rotated second delimited surface to adjust a second height of pixel in the rotated second delimited surface to be equal to a size of the narrowest width of available brushes;
determining of a start position and an end position of the second linear segments in order to sweep the rotated second delimited surface with the brush having the widest possible width in successive and adjacent stripes, for each strip from one border to an opposite border of the rotated second delimited surface while never trespassing a delimitation of the rotated second delimited surface and filling a maximum of the rotated second delimited surface;
determining of a second remaining surface not yet swept of the rotated second delimited surface and repeating the step of determining of a start position and an end position of the linear segments having a smaller width corresponding to an available brush that is smaller than the previously used brush;
generating a computer-generated hologram for each width of available brushes used with the second angle of orientation; and
the step of sending the engraving instructions to the further memory.

3. The method of claim 2, wherein the pixelized image further comprises at least an additional delimited surface to which is attributed an additional appearance, the additional appearance corresponding to a set of an additional angle of orientation of the brush and an additional period corresponding to a distance separating one focal spot from a next focal spot in the brush, the additional delimited surface to be filled with engraved structures arranged as additional linear segments by means of the engraving beam, the additional linear segments being perpendicular to the additional orientation of the brush,
wherein at least the following steps are executed as appropriate:
uploading of the pixelized image of the additional delimited surface in the memory of the system;
uploading the table of appearances comprising in addition for the additional appearance a set with the additional angle of orientation and the additional period;
uploading parameters for widths of available brushes for the additional appearance, the parameters comprising a list of at least one brush with a determined number of focal spots;
rotating the additional delimited surface as a function of an angle of rotation corresponding to the additional angle of orientation;
re-pixelization of the rotated additional delimited surface to adjust a second height of pixel in the rotated additional delimited surface to be equal to a size of the narrowest width of available brushes;
determining of a start position and an end position of the additional linear segments in order to sweep the rotated additional delimited surface with the brush having the widest possible width in successive and adjacent stripes, for each strip from one border to an opposite border of the rotated additional delimited surface while never trespassing a delimitation of the rotated additional delimited surface and filling a maximum of the rotated additional delimited surface;
determining of an additional remaining surface not yet swept of the rotated additional delimited surface and repeating the step of determining of a start position and an end position of the linear segments having a smaller width corresponding to an available brush that is smaller than the previously used brush;
generating a computer-generated hologram for each width of available brushes used with the additional angle of orientation; and
the step of sending the engraving instructions to the further memory of the system.

4. The method of any one of claims 1 to 3, wherein the step of uploading the parameters for widths of available brushes further comprises sorting the at least one brush(es) as a function of their respective width expressed in a number of the focal spots, from the widest brush to the narrowest brush.

5. The method of any one of claims 1 to 3, wherein the step of generating computer generated holograms is configured to use an iterative Fourier-transform algorithm.

6. A data carrier comprising a software that enables a computer to execute the method of any one of claims 1 to 5,
whereby the method is configured for obtaining engraving instructions to control a system comprising a Spatial Light Modulator (SLM), the engraving instructions being configured to control the system to represent a pixelized image on a solid piece by means of an engraving beam,
the engraving beam being formed by an adjustable number of focal spots aligned on an orientation axis, thereby defining a brush, and being generated by means of a laser and the SLM; and
the pixelized image comprising at least a first delimited surface to which is attributed a first appearance, the first appearance corresponding to a set of a first angle of orientation of the brush and a first period corresponding to a distance separating one focal spot from a next focal spot in the brush, the first delimited surface to be filled with engraved structures arranged as first linear segments by means of the engraving beam, the first linear segments being perpendicular to the first orientation of the brush;
the method comprising:
uploading of the pixelized image of the first delimited surface into a memory of the system;
uploading a table of appearances comprising at least for the first appearance a set with the first angle of orientation and the first period;
uploading parameters for available brush widths at least for the first appearance, the parameters comprising a list of at least one brush with a determined number of focal spots;
rotating the first delimited surface as a function of an angle of rotation corresponding to the first angle of orientation;
re-pixelization of the rotated first delimited surface to adjust a first height of pixel in the rotated first delimited surface to be equal to a size of the narrowest width of available brushes;
determining of a start position and an end position of each of the linear segments in order to sweep the rotated first delimited surface with the brush having the widest possible width in successive and adjacent stripes, for each stripe from one border to an opposite border of the rotated first delimited surface while never trespassing a delimitation of the rotated first delimited surface and filling a maximum of the rotated first delimited surface;
determining of a first remaining surface not yet swept of the rotated first delimited surface and repeating the step of determining of a start position and an end position of the linear segments having a smaller width corresponding to an available brush that is smaller than the previously used brush;
generating a computer-generated hologram for each available brush width used with the first angle of orientation; and
sending engraving instructions to a further memory of the system, the engraving instructions comprising at least
positioning commands for causing a relative movement between the solid piece and respective ones of each of the brushes to engrave the linear segments for engraving;
computer-generated holograms and triggers for displaying of the computer-generated holograms on the screen of the SLM; and
laser control commands for switching the laser on and off.
